# EUROPEAN PATENT APPLICATION

(11) **EP 4 462 848 A1**
(43) Date of publication of application: **13.11.2024**
(21) Application number: 22923489.3
(22) Date of filing: 07.12.2022
(51) Int. Cl.: H04W 24/02

(54) **COMMUNICATION METHOD AND APPARATUS**

(30) Priority: 26.01.2022 CN 202210094682
(71) Applicant: Huawei Technologies Co., Ltd., Shenzhen, Guangdong 518129 (CN)
(72) Inventor: LIN, Kaijiang, Shenzhen, Guangdong 518129 (CN)
(74) Representative: Pfenning, Meinig & Partner mbB
(86) International application number: PCT/CN2022/137277
(87) International publication number: WO 2023/142699

(57) **Abstract**

This application relates to the field of communication technologies and provides a communication method and apparatus, to improve processing efficiency. A first network element may receive a connection establishment request message from a second network element, and select a first manner from a plurality of manners based on a source address or a destination address in the connection establishment request message, where the plurality of manners include but are not limited to a manner of determining a processing process based on load information of the processing process and a manner of determining a processing process based on a hash selection mechanism. Then, the first network element determines, in the first manner, a first processing process for processing the connection establishment request. The first network element may select a manner from the plurality of manners based on the source address or the destination address in the message. This can be more flexible than a case of determining a processing process in only one manner. In addition, the plurality of manners include the manner of determining a processing process based on load information. When processing processes are determined based on the load information, load balance can be implemented. This improves processing efficiency of the processing processes.

## Description

### CROSS-REFERENCE TO RELATED APPLICATIONS

This application claims priority to Chinese Patent Application No. 202210094682.1, filed with the China National Intellectual Property Administration on January 26, 2022 and entitled "COMMUNICATION METHOD AND APPARATUS", which is incorporated herein by reference in its entirety.

### TECHNICAL FIELD

Embodiments of this application relate to the fields of communication and the like, and in particular, to a communication method and apparatus.

### BACKGROUND

Currently, when a network function (network function, NF) network element of a core network uses a service provided by another NF network element, the NF network element acts as a client (Client), also referred to as a client network element, and the another NF network element acts as a server (Server), also referred to as a server network element.

The client network element sends a connection establishment request message to the server network element, to request to establish a connection to the server network element. The server network element associates the request message with a specific processing process (there are usually a plurality of processing process instances in the server network element for providing a system capacity), and the processing process completes an entire subsequent service procedure for the client network element.

Currently, the server network element selects the processing process corresponding to the request message from a plurality of processing processes based on a hash (hash) algorithm and a 3-tuple (destination internet protocol (internet protocol, IP) IP address, destination port number, and protocol type) or a 5-tuple (source IP address, source port number, destination IP address, destination port number, protocol type) in the connection establishment request message. This processing mechanism is briefly referred to as a hash selection mechanism.

The hash selection mechanism features that a processing process is selected based on a static attribute of a request message. This selection manner is very fixed and inflexible. When a processing process is selected in this manner, processing efficiency of the processing process is affected.

### SUMMARY

Embodiments of this application provide a communication method and apparatus, to improve processing efficiency.

According to a first aspect, a communication method is provided. The method may be performed by a first network element or a component used in the first network element, for example, a chip or a processor. The following provides descriptions by using an example in which the method is performed by the first network element. First, the first network element may receive a connection establishment request message from a second network element. Next, the first network element may select a first manner from a plurality of manners based on a source address or a destination address in the connection establishment request message, where the plurality of manners include but are not limited to a manner of determining a processing process based on load information of the processing process and a manner of determining a processing process based on a hash selection mechanism. Then, the first network element determines, in the first manner, a first processing process for processing the connection establishment request.

The plurality of manners of determining a processing process are configured in the first network element. The first network element may select a manner from the plurality of manners based on the source address or the destination address in the message. This can be more flexible than a case of determining a processing process in only one manner (for example, based on the hash selection mechanism). In addition, the plurality of manners include the manner of determining a processing process based on load information. When a processing process is determined based on load information, load balance can be implemented. It may be understood that this example is described by using any connection establishment request message as an example. When the first network element receives a large quantity of connection establishment request messages from different network elements, there are usually some connection establishment request messages for which processing processes are determined based on load information, so that load balance can be implemented to a specific extent. This improves processing efficiency of the processing processes.

In a possible implementation, that the first network element selects a first manner from a plurality of manners based on a source address in the connection establishment request message may be: when the source address in the connection establishment request message is in a specified address list, selecting, as the first manner, the manner of determining a processing process based on load information of the processing process; or when the source address in the connection establishment request message is not in the specified address list, selecting, as the first manner, the manner of determining a processing process based on a hash selection mechanism.

In a possible implementation, that the first network element selects a first manner from a plurality of manners based on a source address in the connection establishment request message may be: when a region number of the second network element is the same as a region number of the first network element, selecting, as the first manner, the manner of determining a processing process based on load information of the processing process; or when the region number of the second network element is different from the region number of the first network element, selecting, as the first manner, the manner of determining a processing process based on a hash selection mechanism. The first network element may parse only a value of a bit at a specific position of the source address based on an address structure, to obtain the region number of the second network element. This parsing process is relatively simple, and fewer processing resources of the first network element are used. In addition, a load on a link in a same region is relatively high. When the first network element and the second network element are located in a same region, a load on a link established based on the connection establishment request message is relatively high. In this case, a processing process is determined based on load information of the processing process, so that load balance can be ensured to a specific extent. When the first network element and the second network element are located in different regions, the load on the link established based on the connection establishment request message is relatively low. The relatively low load has little impact on load balance of processing processes of the first network element. In this case, a manner of determining a processing process may not be limited. Compared with the manner of determining a processing process based on load information of the processing process, the manner of determining a processing process based on the hash selection mechanism is simpler and easier. In this case, a processing process is determined based on the hash selection mechanism, so that fewer processing resources of the first network element are used.

In a possible implementation, that the first network element selects a first manner from a plurality of manners based on a destination address in the connection establishment request message may be: using, as the first manner, a manner corresponding to the destination address in the connection establishment request message, where the first network element has a plurality of addresses that identify the first network element, the plurality of addresses of the first network element are in a one-to-one correspondence with the plurality of manners, and the destination address is selected by the second network element from the plurality of addresses of the first network element. The first network element may quickly determine the first manner based on a pre-stored correspondence between a manner of determining a processing process and an address and/or a port. This process is relatively simple, and fewer processing resources of the first network element are used.

In a possible implementation, when determining that a processing process associated with the source address in the connection establishment request message is not stored, the first network element may further select the first manner from the plurality of manners based on the source address or the destination address in the connection establishment request message. When the first manner is the manner of determining a processing process based on load information of the processing process, after the first processing process is determined, the first network element may further store an association relationship between the first processing process and the source address in the connection establishment request message. The association relationship between the first processing process and the source address in the connection establishment request message is stored, so that another message on the link that is subsequently received can be quickly and accurately associated with the first processing process based on the association relationship.

In a possible implementation, the first network element may further receive a first message, where a source address of the first message is the same as the source address in the connection establishment request message. Then, the first network element assigns the first message to the first processing process based on the stored association relationship between the first processing process and the source address.

According to a second aspect, a communication method is provided. The method may be performed by a second network element or a component used in the second network element, for example, a chip or a processor. The following provides descriptions by using an example in which the method is performed by the second network element. When a first network element and the second network element are located in a same region, the second network element may select a first address from a plurality of stored addresses that identify the first network element. When the first network element and the second network element are not located in the same region, the second network element may select a second address from the plurality of addresses of the first network element. A manner corresponding to the first address is a manner of determining a processing process based on load information of the processing process, and a manner corresponding to the second address is a manner of determining a processing process based on a hash selection mechanism. Then, the second network element sends a connection establishment request message to the first network element. A destination address in the connection establishment request message is the first address or the second address.

A load on a link in a same region is relatively high. When the first network element and the second network element are located in the same region, a load on a link established based on the connection establishment request message is relatively high. In this case, a processing process is determined based on load information of the processing process, so that load balance can be ensured to a specific extent. When the first network element and the second network element are located in different regions, the load on the link established based on the connection establishment request message is relatively low. The relatively low load has little impact on load balance of processing processes of the first network element. In this case, a manner of determining a processing process may not be limited. Compared with the manner of determining a processing process based on load information of the processing process, the manner of determining a processing process based on the hash selection mechanism is simpler and easier. In this case, a processing process is determined based on the hash selection mechanism, so that fewer processing resources of the first network element are used.

According to a third aspect, a communication method is provided. The method may be performed by a second network element or a component used in the second network element, for example, a chip or a processor. The following provides descriptions by using an example in which the method is performed by the second network element. When a volume of data on a link established based on a connection establishment request message is less than or equal to a specified threshold, the second network element may select a first address from a plurality of stored addresses that identify a first network element. When the volume of data is less than or equal to the specified threshold, the second network element may select a second address from the plurality of addresses of the first network element. A manner corresponding to the first address is a manner of determining a processing process based on load information of the processing process, and a manner corresponding to the second address is a manner of determining a processing process based on a hash selection mechanism. Then, the second network element sends the connection establishment request message to the first network element. A destination address in the connection establishment request message is the first address or the second address.

When there is a large volume of data on the link, a load on the link established based on the connection establishment request message is relatively high. In this case, a processing process is determined based on load information of the processing process, so that load balance can be ensured to a specific extent. When there is a small volume of data on the link, the load on the link established based on the connection establishment request message is relatively low. The relatively low load has little impact on load balance of processing processes of the first network element. In this case, a manner of determining a processing process may not be limited. Compared with the manner of determining a processing process based on load information of the processing process, the manner of determining a processing process based on the hash selection mechanism is simpler and easier. In this case, a processing process is determined based on the hash selection mechanism, so that fewer processing resources of the first network element are used.

According to a fourth aspect, a communication apparatus is provided. The apparatus has functions of implementing any one of the foregoing aspects and the possible implementations of the foregoing aspects. The functions may be implemented by hardware, or may be implemented by hardware executing corresponding software. The hardware or the software includes one or more functional modules corresponding to the foregoing functions.

According to a fifth aspect, a communication apparatus is provided, including a processor and optionally a memory. The processor is coupled to the memory. The memory is configured to store computer programs or instructions. The processor is configured to: execute some or all of the computer programs or instructions in the memory; and when the some or all of the computer programs or instructions are executed, implement a function in the method according to any one of the foregoing aspects and the possible implementations of the foregoing aspects.

In a possible implementation, the apparatus may further include a transceiver. The transceiver is configured to: transmit a signal obtained through processing performed by the processor, or receive a signal input to the processor. The transceiver may perform a sending action or a receiving action in any one of the aspects and the possible implementations of the aspects.

According to a sixth aspect, this application provides a chip system. The chip system includes one or more processors (also referred to as processing circuits). The processor is electrically coupled to a memory (also referred to as a storage medium). The memory may be located in the chip system, or may not be located in the chip system. The memory is configured to store computer programs or instructions. The processor is configured to: execute some or all of the computer programs or instructions in the memory; and when the some or all of the computer programs or instructions are executed, implement a function in the method according to any one of the foregoing aspects and the possible implementations of the foregoing aspects.

In a possible implementation, the chip system may further include an input/output interface (also referred to as a communication interface). The input/output interface is configured to output a signal obtained through processing performed by the processor, or receive a signal input to the processor. The input/output interface may perform a sending action or a receiving action in any one of the aspects and the possible implementations of the aspects. Specifically, the output interface performs the sending action, and the input interface performs the receiving action.

In a possible implementation, the chip system may include a chip, or may include the chip and another discrete device.

According to a seventh aspect, a computer-readable storage medium is provided, configured to store a computer program. The computer program includes instructions for implementing a function in any one of the aspects and the possible implementations of the aspects.

Alternatively, a computer-readable storage medium is provided, configured to store a computer program. When the computer program is executed by a computer, the computer is enabled to perform the method according to any one of the foregoing aspects and the possible implementations of the foregoing aspects.

According to an eighth aspect, a computer program product is provided. The computer program product includes computer program code. When the computer program code is run on a computer, the computer is enabled to perform the method according to any one of the foregoing aspects and the possible implementations of the foregoing aspects.

According to a ninth aspect, a communication system is provided. The communication system includes the first network element that performs the method according to any one of the first aspect and the possible implementations of the first aspect, and the second network element that performs the method according to any one of the second aspect and the possible implementations of the second aspect. Alternatively, the communication system includes the first network element that performs the method according to any one of the first aspect and the possible implementations of the first aspect, and the second network element that performs the method according to any one of the third aspect and the possible implementations of the third aspect.

For technical effects of the fourth aspect to the ninth aspect, refer to the descriptions of the first aspect to the third aspect. Details are not described herein again.

### BRIEF DESCRIPTION OF DRAWINGS

FIG. 1 is a schematic diagram of a structure of a communication system according to an embodiment of this application;
FIG. 2 is a schematic flowchart of a communication method according to an embodiment of this application;
FIG. 3 is a schematic diagram of a communication method according to an embodiment of this application;
FIG. 4 is a schematic diagram of a structure of an IP address according to an embodiment of this application;
FIG. 5 is a schematic diagram of a communication method according to an embodiment of this application;
FIG. 6 is a schematic diagram of a communication method according to an embodiment of this application;
FIG. 7 is a schematic diagram of a structure of a communication apparatus according to an embodiment of this application; and
FIG. 8 is a schematic diagram of a structure of a communication apparatus according to an embodiment of this application.

### DESCRIPTION OF EMBODIMENTS

To facilitate understanding of technical solutions in embodiments of this application, the following briefly describes a system architecture for a method provided in embodiments of this application. It may be understood that the system architecture described in embodiments of this application is intended to describe the technical solutions in embodiments of this application more clearly, and does not constitute any limitation on the technical solutions provided in embodiments of this application.

The technical solutions in embodiments of this application may be applied to various communication systems, for example, a satellite communication system and a conventional mobile communication system. The satellite communication system may be integrated with the conventional mobile communication system (namely, a terrestrial communication system). For example, the communication systems may be a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a fifth-generation (5th generation, 5G) system or a new radio (new radio, NR) system, a sixth-generation (6th generation, 6G) system, another future communication system, and the like. A communication system that integrates a plurality of wireless technologies is also supported. For example, the technical solutions in embodiments of this application may also be applied to a system that integrates a terrestrial mobile communication network and a non-terrestrial network (non-terrestrial network, NTN), such as an uncrewed aerial vehicle communication network, a satellite communication system, and high-altitude platform station (high-altitude platform station, HAPS) communication network.

To facilitate understanding of embodiments of this application, the following describes an application scenario of this application. The network architecture and a service scenario described in embodiments of this application are intended to describe the technical solutions in embodiments of this application more clearly, and do not constitute any limitation on the technical solutions provided in embodiments of this application. Persons of ordinary skill in the art may know that, as a new service scenario emerges, the technical solutions provided in embodiments of this application are also applicable to a similar technical problem.

Currently, NF network elements in a 5G core (Core) network are interconnected through a hypertext transfer protocol (hypertext transfer protocol, HTTP)/transmission control protocol (transmission control protocol, TCP)-based southbound interface (southbound interface, SBI). When a network function (network function, NF) network element of the core network uses a service provided by another NF network element, the NF network element acts as a client (Client), also referred to as a client network element, and the another NF network element acts as a server (Server), also referred to as a server network element.

The client network element sends a connection establishment request message to the server network element, to request to establish a connection to the server network element. The server network element associates the request message with a specific processing process (there are usually a plurality of processing process instances in the server network element for providing a system capacity), and the processing process completes an entire subsequent service procedure for the client network element.

Currently, the server network element selects the processing process corresponding to the request message from a plurality of processing processes based on a hash (hash) algorithm and a 3-tuple (destination IP address, destination port number, protocol type) or a 5-tuple (source IP address, source port number, destination IP address, destination port number, and protocol type) in the connection establishment request message. This processing mechanism is briefly referred to as a hash selection mechanism.

A characteristic of the hash selection mechanism is that a processing process is selected based on a static attribute of the request message. This selection manner causes the selected processing process to be highly uncertain. When loads on a link established based on the connection establishment request are different, loads of processing processes are also unbalanced. In addition, one selection manner is very fixed and inflexible. In general, when a processing process is selected in this manner, processing efficiency of the processing process may be affected, and overall processing performance of the server network element degrades.

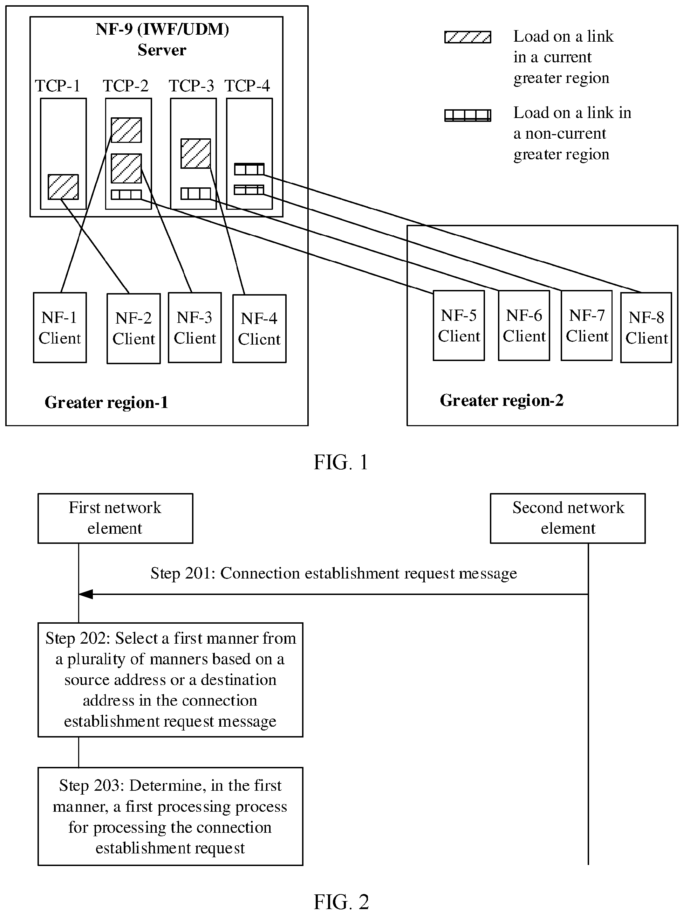

For example, 5G core of a China operator is constructed based on greater regions (such as East China, North China, Central China, South China, and the like), and some NF network elements, such as a unified data management (unified data management, UDM) network element and an interworking function (interworking function, IWF) network element, are deployed at a level of a greater region. In other words, one UDM is deployed in each greater region. Another NF network element in a current greater region may establish a link to a UDM network element in the current greater region and a link to a UDM network element in a non-current greater region. Usually, traffic in the current greater region is heavier, and traffic in the non-current greater region is lighter (cross-greater region access to a UDM in another greater region is required when a user from the non-current greater region (namely, a roaming user) accesses a network). Therefore, for a UDM network element in a greater region, a load on a link to an NF network element in the greater region is far higher than a load on a link to an NF network element in a non-current greater region. Selecting a processing process based on the hash selection mechanism may cause loads between a plurality of processing processes in the UDM network element unbalanced. The following provides descriptions by using FIG. 1 as an example.

A greater region-1 is deployed with client network elements NF-1, NF-2, NF-3, and NF-4, and a server network element NF-9 (for example, a UDM network element or an IWF network element). A greater region-2 is deployed with client network elements NF-5, NF-6, NF-7, and NF-8. NF-9 establishes a connection to an NF network element in a current greater region (the greater region-1) and a non-current greater region (the greater region-2). A server load balancer (server load balancer, SLB) module of NF-9 selects a processing process for a message on a link based on the hash selection mechanism. Messages from NF-1, NF-3, and NF-5 are bound to a processing process TCP-2, and messages from NF-7 and NF-8 are bound to a processing process TCP-4. Traffic on a link in the current greater region is far heavier than traffic on a link in the non-current greater region. As a result, a load of the processing process TCP-2 is far higher than a load of the processing process TCP-4.

On this basis, this application provides a method for determining a processing process, to improve flexibility of determining a processing process and implement load balance to a specific extent.

The following describes the solutions in detail with reference to the accompanying drawings. Features or content denoted by dashed lines in the accompanying drawings may be understood as optional operations or optional structures in embodiments of this application.

As shown in FIG. 2, a communication method is provided. The communication method may be applied to the communication system shown in FIG. 1. For example, a first network element may be the server network element NF-9 in FIG. 1, and a second network element may be the client network element NF-1, NF-2, NF-3, NF-4, NF-5, NF-6, NF-7, or NF-8 in FIG. 1. The first network element may be any network element that can be used as a server, such as a unified data management UDM network element, an interworking function IWF network element, a policy control function (policy control function, PCF) network element, a session management function (session management function, SMF) network element, a user plane function (user plane function, UPF) network element, an access and mobility management function (access and mobility management function, AMF) network element, a unified data repository (unified data repository, UDR) network element, or the like. The second network element may be any network element that can be used as a client, such as a policy control function PCF network element, a session management function SMF network element, a user plane function UPF network element, an access and mobility management function AMF network element, a unified data repository UDR network element, or the like.

Step 201: The second network element sends a connection establishment request message to the first network element, and correspondingly, the first network element receives the connection establishment request message from the second network element.

The connection establishment request message may be a transport layer message or a network layer message. The connection establishment request message may be transmitted through a southbound interface SBI. For example, the connection establishment request message is a transmission control protocol TCP connection establishment request message (such as a TCP SYN packet), a hypertext transfer protocol HTTP connection establishment request message, or a stream transmission control protocol (stream control transmission protocol, SCTP) connection establishment request message.

This application is for a scenario in which no communication link is established between the first network element and the second network element. The connection establishment request message sent by the second network element to the first network element is used to request to establish a communication link to the first network element. The link may be an SBI link.

Step 202: The first network element selects a first manner from a plurality of manners based on a source address or a destination address in the connection establishment request message.

The address may be an IP address.

The plurality of manners include but are not limited to: a manner of determining a processing process based on load information of the processing process and a manner of determining a processing process based on a hash selection mechanism.

The manner of determining a processing process based on a hash selection mechanism may be: performing hash calculation on a 3-tuple (destination IP address, destination port number, protocol type) or a 5-tuple (source IP address, source port number, destination IP address, destination port number, protocol type) in the message to obtain a hash value, obtaining a remainder of the hash value divided by a total quantity of processing processes, and using, as a determined processing process, a processing process with a number corresponding to the remainder.

The manner of determining a processing process based on load information of the processing processes may be: considering load information of a plurality of processing processes, and selecting a processing process with a relatively low load. For example, the processing process is determined based on absolute loads of the plurality of processing processes. For example, a processing process with a lowest load is used as the determined processing process, or any one of processing processes whose loads each are less than or equal to a specified threshold is used as the determined processing process. For another example, the processing process is determined based on relative loads of the plurality of processing processes. For example, a probability is assigned to each processing process based on a load of each processing process. A probability of a processing process with a high load is low, and a probability of a processing process with a low load is high. The probability indicates a probability of assigning a plurality of received connection establishment request messages to the processing process. For example, a probability of a processing process 1 is 0.4, and a probability of a processing process 2 is 0.6. When 10 connection establishment requests are received, four connection establishment requests may be assigned to the processing process 1, and six connection establishment request messages may be assigned to the processing process 2.

The load information may be information such as CPU usage, memory usage, or the like.

A process of selecting the first manner from the plurality of manners is described in detail below.

Step 203: The first network element determines, in the first manner, a first processing process for processing the connection establishment request.

There are a plurality of processing processes in the first network element. After selecting the first processing process for the connection establishment request message in the first manner, the first network element may assign the connection establishment request message to the first processing process for processing.

When the connection establishment request message is a TCP connection establishment request message, the first processing process is a TCP processing process. When the connection establishment request message is an HTTP connection establishment request message, the first processing process is an HTTP processing process.

The plurality of manners of determining a processing process are configured in the first network element. The first network element may select a manner from the plurality of manners based on the source address or the destination address in the message. This can be more flexible than a case of determining a processing process in only one manner (for example, based on the hash selection mechanism). In addition, the plurality of manners include the manner of determining a processing process based on load information. When a processing process is determined based on load information, load balance can be implemented. It may be understood that this example is described by using any connection establishment request message as an example. When the first network element receives a large quantity of connection establishment request messages from different network elements, there are usually some connection establishment request messages for which processing processes are determined based on load information, so that load balance can be implemented to a specific extent. This improves processing efficiency of the processing processes.

In an optional example, after receiving the connection establishment request message from the second network element, the first network element may first determine whether a processing process associated with the source address in the connection establishment request message is stored. If the processing process associated with the source address in the connection establishment request message is not stored, the first network element selects the first manner from the plurality of manners based on the source address or the destination address in the connection establishment request message, and determines, in the first manner, the first processing process for processing the connection establishment request. If the processing process associated with the source address in the connection establishment request message is stored, the first network element may assign the connection establishment request message to the associated processing process.

When the first manner is the manner of determining a processing process based on load information of the processing process, after the first processing process is determined, the first network element may further store an association relationship between the first processing process and the source address in the connection establishment request message.

Usually, messages on a link are processed by a same processing process. In this case, the connection establishment request message, and another message on a link established based on the connection establishment request message need to be assigned to the same processing process. For the hash selection mechanism, a hash operation may be performed each time a message is received. 3-tuples or 5-tuples of messages on a same link are the same, and calculated hash values are the same. In this case, even if an association relationship is not stored, the messages on the same link may be associated with a same processing process. In the manner of determining a processing process based on load information of the processing process, the association relationship between the first processing process and the source address in the connection establishment request message may be stored, so that the another message on the link that is subsequently received can be quickly and accurately associated with the first processing process based on the association relationship.

For example, the first network element receives a first message, and assigns the first message to the first processing process based on the stored association relationship between the first processing process and the source address. For example, a source address of the first message is the same as the source address in the connection establishment request message. It may also be understood that the first message is a message on the link established based on the connection establishment request message.

In an optional example, when a first condition is met, the association relationship between the first processing process and the source address is deleted. For example, the first condition is that no message on the link is received within preset duration. Alternatively, when the first network element needs to migrate the link, for example, from the first processing process to another processing process, the association relationship between the first processing process and the source address may be deleted. The association relationship is managed in a timely manner, so that fewer storage resources of the first network element are used.

The following describes in detail a process in which the first network element selects the first manner from the plurality of manners based on the source address or the destination address in the connection establishment request message.

In this process, the first network element may perform link feature learning, and identify a link with a high load or a link with a low load based on a specific rule and a source address or a destination address. Precise control is performed on the link with a high load. To be specific, the link is associated with a proper processing process based on load information of each processing process. The link with a low load is associated with a processing process based on the hash selection mechanism.

In an optional example, the first manner is selected from the plurality of manners of determining a processing process, depending on whether the source address in the connection establishment request message is in a pre-specified address list. For example, when the source address in the connection establishment request message is in the specified address list, the manner of determining a processing process based on load information of the processing process is selected as the first manner; or when the source address in the connection establishment request message is not in the specified address list, the manner of determining a processing process based on a hash selection mechanism is selected as the first manner. Usually, a load on a link established between the first network element and a network element that corresponds to an address in the address list is relatively high. For example, the specified address list may include an address of a network element in a region in which the first network element is located. Optionally, the specified address list may also include an address of a network element in a region other than the region in which the first network element is located. A load on a link in a same region is relatively high. For the link in the same region, a processing process is determined based on load information of the processing process, so that load balance can be ensured to a specific extent.

The region may be at a level of a greater region, for example, Central China, North China, or the like. The region may alternatively be at a level of a province or a municipality, for example, the province of Hebei, the municipality of Beijing, or the like. The region may alternatively be at a level of a city, for example, the city of Langfang, the city of Shijiazhuang, or the like. For example, the region in which the first network element is located is a greater region-1, and the pre-specified address list may include an address of a network element in the greater region-1. Optionally, the pre-specified address list may also include an address of a network element in another greater region, such as a greater region-2 or the like. The address may be an IP address.

An operator may input an address that needs precise control, to the first network element by configuring or setting an environment variable, or the like. The address that needs precise control is an address in the specified address list.

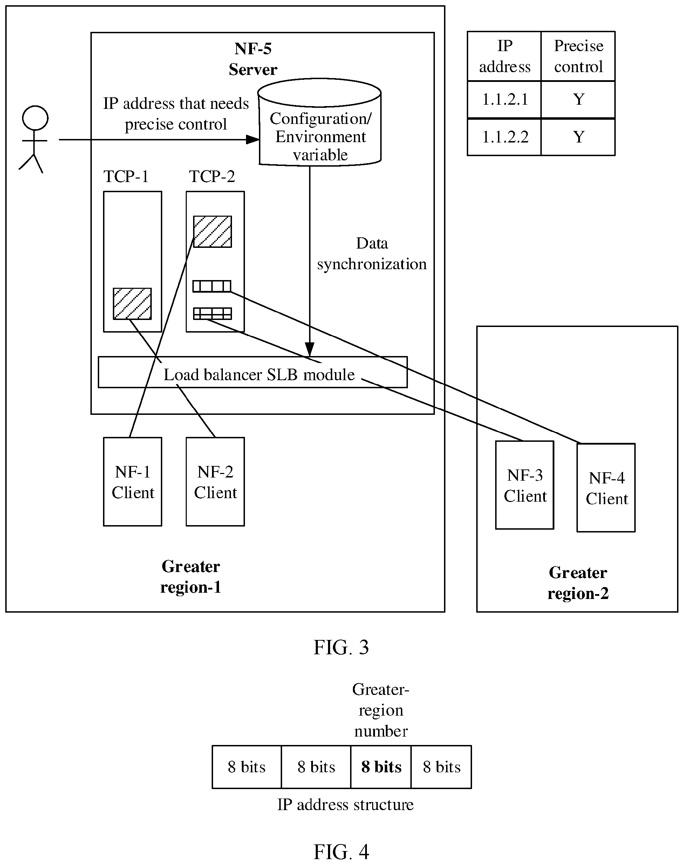

As shown in FIG. 3, an IP address of NF-1 in a greater region-1 is 1.1.2.1, an IP address of NF-2 in the greater region-1 is 1.1.2.2, an IP address of NF-3 in a greater region-2 is 1.1.1.1, and an IP address of NF-4 in the greater region-2 is 1.1.1.2. A list of IP addresses that need precise control and may be inputted by an operator into a system of NF-5 by configuring or setting, or the like includes 1.1.2.1 and 1.1.2.2. The system synchronizes the list of IP addresses that need precise control, to a load balancer SLB module. After receiving a connection establishment request message, the SLB module matches a source IP address in the connection establishment request message with the list of IP addresses that need precise control, and determines whether the message needs precise control. In this example, the SLB module may perform precise control (that is, determine a processing process based on load information) for a message whose source address is 1.1.2.1 and a message whose source address is 1.1.2.2, and may determine a processing process by using a hash selection mechanism (for example, perform hash selection by using a 5-tuple), for a message whose source address is 1.1.1.1 and a message whose source address is 1.1.1.2.

Alternatively, the foregoing example may be reversed. An address that does not need precise control may be stored in the specified address list. In this case, when the source address in the connection establishment request message is in the specified address list, the manner of determining a processing process based on a hash selection mechanism is selected as the first manner; or when the source address is not in the specified address list, the manner of determining a processing process based on load information of the processing process is selected as the first manner.

In the foregoing example, the specified address list may also be replaced with a specified address range. When the source address in the connection establishment request message falls within the specified address range, the manner of determining a processing process based on load information of the processing process is selected as the first manner; or when the source address in the connection establishment request message does not fall within the specified address range, the manner of determining a processing process based on a hash selection mechanism is selected as the first manner. The specified address range may be in a form of an address list, or may be an address range, for example, XXXX to YYYY.

In an optional example, when a China operator constructs a core (for example, 5G core) network, addresses (for example, IP addresses) of all NF network elements are planned according to a same rule, and a number of a region (for example, a greater region) in which the network element is located is incorporated in the address. For example, in an IP address structure shown in FIG. 4, an address is 32 bits. In this case, 8 bits that are second from the last (8 bits that are third from the first) represent a number of a greater region according to a numbering rule of an IP address of an NF network element.

The first network element may determine, based on a region number in the source address in the connection establishment request message, whether the first network element and the second network element are located in a same region, and select the first manner from the plurality of manners depending on a result of whether the first network element and the second network element are located in the same region. The region may be at a level of a greater region, for example, Central China, North China, or the like. The region may alternatively be at a level of a province or a municipality, for example, the province of Hebei, the municipality of Beijing, or the like. The region may alternatively be at a level of a city, for example, the city of Langfang, the city of Shijiazhuang, or the like. The first network element may parse only a value of a bit at a specific position of the source address based on an address structure, to obtain a region number of the second network element. This parsing process is relatively simple, and fewer processing resources of the first network element are used.

For example, the region number of the second network element is obtained from the source address in the connection establishment request message. When the region number of the second network element is the same as a region number of the first network element, the manner of determining a processing process based on load information of the processing process is selected as the first manner. When the region number of the second network element is different from the region number of the first network element, the manner of determining a processing process based on a hash selection mechanism is selected as the first manner.

That the region number of the second network element is obtained from the source address in the connection establishment request message may be: The region number of the second network element is obtained in a mask-based manner. A mask is a string of binary code for performing a bitwise AND operation on a target field to mask a current input bit.

A load on a link in a same region is relatively high. When the first network element and the second network element are located in the same region, a load on the link established based on the connection establishment request message is relatively high. In this case, a processing process is determined based on load information of the processing process, so that load balance can be ensured to a specific extent. When the first network element and the second network element are located in different regions, the load on the link established based on the connection establishment request message is relatively low. The relatively low load has little impact on load balance of processing processes of the first network element. In this case, a manner of determining a processing process may not be limited. Compared with the manner of determining a processing process based on load information of the processing process, the manner of determining a processing process based on the hash selection mechanism is simpler and easier. In this case, a processing process is determined based on the hash selection mechanism, so that fewer processing resources of the first network element are used.

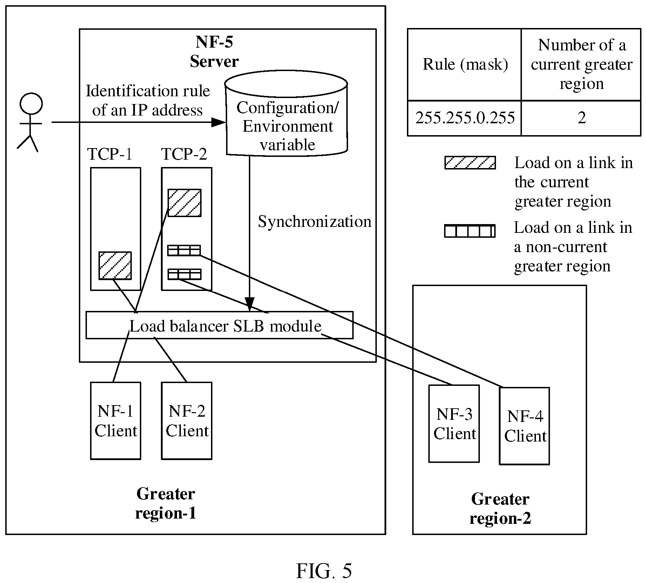

As shown in FIG. 5, an IP address of NF-1 in a greater region-1 is 1.1.2.1, an IP address of NF-2 in the greater region-1 is 1.1.2.2, an IP address of NF-3 in a greater region-2 is 1.1.1.1, and an IP address of NF-4 in the greater region-2 is 1.1.1.2. An operator may input a number (for example, 2) of a greater region in which a system of NF-5 is located and an identification rule (for example, second 8 bits, that is, a mask 255.255.0.255) of a greater-region number in an IP address into the system by configuring or setting, or the like. The system synchronizes the information to a load balancer SLB module. After receiving a connection establishment request message, the SLB module parses a greater-region number in a source IP address in the connection establishment request message based on the identification rule of the greater-region number, and determines whether the parsed greater-region number is the same as the number of the greater region in which the system is located. In this example, the SLB module may perform precise control (that is, determine a processing process based on load information) for a message, where a greater-region number in a source IP address of the message is the same as the number of the greater region in which the system is located (in other words, the greater-region number in the source IP address is 2), and may determine a processing process by using a hash selection mechanism (for example, perform hash selection by using a 5-tuple), for a message, where a greater-region number in a source IP address of the message is different from the number of the greater region in which the system is located (in other words, the greater-region number in the source IP address is not 2).

In an optional example, when a China operator constructs a core (for example, a 5G core) network, two access addresses are configured for the first network element, where the two access addresses may be access addresses that identify the first network element as a server network element, for example, a first address and a second address; or two access endpoints are configured for the first network element, where the two access endpoints may be access endpoints that identify the first network element as the server network element, for example, a first access endpoint and a second access endpoint. The access endpoint may include a port. Optionally, the access endpoint may further include an address. For example, the first access endpoint is a first port, or includes the first address and the first port; and the second access endpoint is a second port, or includes the second address and the second port.

The first address or the first access endpoint is used for access to a link with a high load. A manner that is of determining a processing process and that corresponds to the first address or the first access endpoint is the manner of determining a processing process based on load information of the processing process. The second address or the second access endpoint is used for access to a link with a low load. A manner that is of determining a processing process and that corresponds to the second address or the second access endpoint is the manner of determining a processing process based on a hash selection mechanism.

The first network element publishes, to a network repository function (network repository function, NRF) network element, the two addresses and the manner that is of determining a processing process and that corresponds to each address. Alternatively, the first network element publishes, to the network repository function NRF network element, the two access endpoints and the manner that is of determining a processing process and that corresponds to each access endpoint. The first network element may publish the information to the NRF network element when registering with the NRF. The NRF may notify another NF network element (for example, the second network element) of the information.

In this example, the first network element has a plurality of addresses and/or ports that identify the first network element. The plurality of addresses and/or ports of the first network element are in a one-to-one correspondence with the plurality of manners. The first network element may use, as the first manner, a manner corresponding to the destination address and/or a destination port in the connection establishment request message. The destination address or the destination port or both are selected by the second network element from the plurality of addresses and/or ports of the first network element. The first network element may quickly determine the first manner based on the pre-stored correspondence between the manner of determining a processing process and the address and/or the port. This process is relatively simple, and fewer processing resources of the first network element are used.

In an optional example, the destination address or the destination port or both are selected by the second network element from the plurality of addresses and/or ports that identify the first network element, depending on whether the second network element and the first network element are located in the same region. For example, when the first network element and the second network element are located in the same region, a first manner corresponding to the selected destination address and/or destination port is the manner of determining a processing process based on load information of the processing process; or when the first network element and the second network element are not located in the same region, the first manner corresponding to the selected destination address and/or destination port is the manner of determining a processing process based on a hash selection mechanism.

The second network element determines whether the first network element and the second network element are located in the same region. When the first network element and the second network element are located in the same region, the second network element selects a first address and/or a first port from the plurality of stored addresses and/or ports that identify the first network element. A manner corresponding to the first address and/or the first port is the manner of determining a processing process based on load information of the processing process. When the first network element and the second network element are not located in the same region, the second network element selects a second address and/or a second port from the plurality of addresses and/or ports of the first network element. A manner corresponding to the second address and/or the second port is the manner of determining a processing process based on a hash selection mechanism. Then, the second network element sends the connection establishment request message to the first network element. The destination address in the connection establishment request message is the first address or the second address, and/or the destination port in the connection establishment request message is the first port or the second port. A load on a link in a same region is relatively high. When the first network element and the second network element are located in the same region, a load on the link established based on the connection establishment request message is relatively high. In this case, a processing process is determined based on load information of the processing process, so that load balance can be ensured to a specific extent. When the first network element and the second network element are located in different regions, the load on the link established based on the connection establishment request message is relatively low. The relatively low load has little impact on load balance of processing processes of the first network element. In this case, a manner of determining a processing process may not be limited. Compared with the manner of determining a processing process based on load information of the processing process, the manner of determining a processing process based on the hash selection mechanism is simpler and easier. In this case, a processing process is determined based on the hash selection mechanism, so that fewer processing resources of the first network element are used.

In an optional example, the destination address or the destination port or both are selected from the plurality of addresses and/or ports that represent the first network element, based on a volume of traffic, estimated by the second network element, on the link established based on the connection establishment request message. For example, when the volume of traffic is greater than or equal to a specified threshold, a first manner corresponding to the selected destination address and/or destination port is the manner of determining a processing process based on load information of the processing process; or when the volume of traffic is less than or equal to the specified threshold, a first manner corresponding to the selected destination address and/or destination port is the manner of determining a processing process based on a hash selection mechanism.

The second network element estimates the volume of data on the link established based on the connection establishment request message. When the volume of data on the link established based on the connection establishment request message is less than or equal to the specified threshold, the second network element selects a first address and/or a first port from the plurality of stored addresses and/or ports that identify the first network element. A manner corresponding to the first address and/or the first port is the manner of determining a processing process based on load information of the processing process. When the volume of data is less than or equal to the specified threshold, the second network element selects a second address and/or a second port from the plurality of addresses and/or ports of the first network element. A manner corresponding to the second address is the manner of determining a processing process based on a hash selection mechanism. Then, the second network element sends the connection establishment request message to the first network element. The destination address in the connection establishment request message is the first address or the second address, and/or the destination port in the connection establishment request message is the first port or the second port. When there is a large volume of data on the link, a load on the link established based on the connection establishment request message is relatively high. In this case, a processing process is determined based on load information of the processing process, so that load balance can be ensured to a specific extent. When there is a small volume of data on the link, the load on the link established based on the connection establishment request message is relatively low. The relatively low load has little impact on load balance of processing processes of the first network element. In this case, a manner of determining a processing process may not be limited. Compared with the manner of determining a processing process based on load information of the processing process, the manner of determining a processing process based on the hash selection mechanism is simpler and easier. In this case, a processing process is determined based on the hash selection mechanism, so that fewer processing resources of the first network element are used.

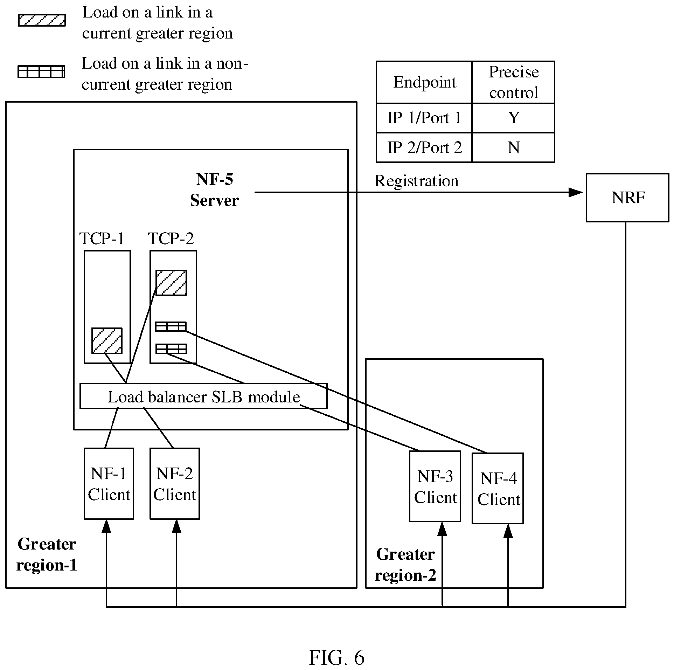

As shown in FIG. 6, when a first network element NF-5 registers with an NRF, two access endpoints are carried: an IP 1/a port 1 and an IP 2/a port 2. A link corresponding to the IP 1/port 1 needs precise control, and a link corresponding to the IP 2/port 2 does not need precise control. The NRF notifies NF-1, NF-2, NF-3, and NF-4 of the information. NF-1 and NF-2 are in a same greater region-1 as NF-5, and select the IP 1/port 1 as a source address/source port. A load balancer SLB module in NF-5 may perform precise control (that is, determine a processing process based on load information) for a message whose source address/source port is the IP 1/port 1. NF-3 and NF-4 are not in a same greater region as NF-5, and select the IP 2/port 2 as a source address/source port. The load balancer SLB module in NF-5 may determine a processing process by using a hash selection mechanism (for example, perform hash selection by using a 5-tuple), for a message whose source address/source port is the IP 2/port 2.

On the basis that an existing SBI network definition is followed, in this application, precise control can be performed on a link with heavy traffic, a system load balancer mechanism with less performance overheads and better effect can be implemented, and a performance specification of a system can be improved.

The foregoing describes the method in embodiments of this application, and the following describes an apparatus in embodiments of this application. The method and the apparatus are based on a same technical concept. Because principles for resolving a problem by using the method and the apparatus are similar, mutual reference may be made between implementations of the apparatus and the method, and repeated descriptions are omitted.

In embodiments of this application, the apparatus may be divided into functional modules based on the foregoing method examples. For example, the apparatus may be divided into functional modules corresponding to functions, or two or more functions may be integrated into one module. These modules may be implemented in a form of hardware, or may be implemented in a form of a software functional module. It should be noted that, in embodiments of this application, division into the modules is an example, and is merely logical function division. During specific implementation, another division manner may be used.

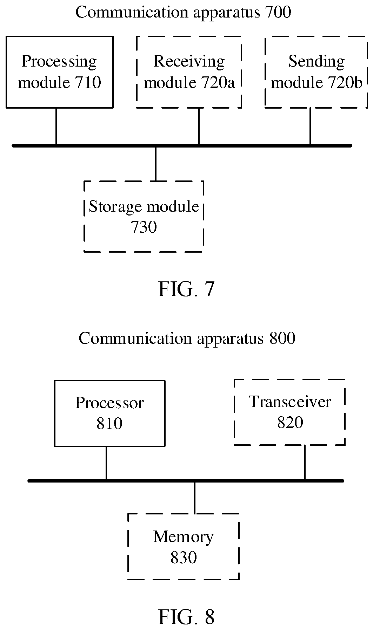

Based on the same technical concept as the foregoing method, FIG. 7 is a schematic diagram of a structure of a communication apparatus 700. The apparatus 700 may include a processing module 710. Optionally, the apparatus 700 may further include a receiving module 720a, a sending module 720b, and a storage module 730. The processing module 710 may be separately connected to the storage module 730, the receiving module 720a, and the sending module 720b. The storage module 730 may also be connected to the receiving module 720a and the sending module 720b.

In an example, the receiving module 720a and the sending module 720b may alternatively be integrated together as a transceiver module.

In an example, the apparatus 700 may be a first network element, or may be a chip or a functional unit used in the first network element. The apparatus 700 has any function of the first network element in the foregoing method. For example, the apparatus 700 can perform steps performed by the first network element in the method described with reference to FIG. 2, FIG. 3, FIG. 5, and FIG. 6.

The receiving module 720a may perform a receiving action performed by the first network element in the foregoing method embodiments.

The sending module 720b may perform a sending action performed by the first network element in the foregoing method embodiments.

The processing module 710 may perform an action, other than the sending action and the receiving action, performed by the first network element in the foregoing method embodiments.

In an example, the receiving module 720a is configured to receive a connection establishment request message from a second network element. The processing module 710 is configured to: select a first manner from a plurality of manners based on a source address or a destination address in the connection establishment request message, where the plurality of manners include a manner of determining a processing process based on load information of the processing process and a manner of determining a processing process based on a hash selection mechanism; and determine, in the first manner, a first processing process for processing the connection establishment request.

In an example, the processing module 710 is specifically configured to: when the source address in the connection establishment request message is in a specified address list, select, as the first manner, the manner of determining a processing process based on load information of the processing process; or when the source address in the connection establishment request message is not in the specified address list, select, as the first manner, the manner of determining a processing process based on a hash selection mechanism.

In an example, the processing module 710 is specifically configured to: obtain a region number of the second network element from the source address in the connection establishment request message; and when the region number of the second network element is the same as a region number of the apparatus, select, as the first manner, the manner of determining a processing process based on load information of the processing process; or when the region number of the second network element is different from the region number of the apparatus, select, as the first manner, the manner of determining a processing process based on a hash selection mechanism.

In an example, the processing module 710 is specifically configured to use, as the first manner, a manner corresponding to the destination address in the connection establishment request message, where the apparatus has a plurality of addresses that identify the apparatus, the plurality of addresses of the apparatus are in a one-to-one correspondence with the plurality of manners, and the destination address is selected by the second network element from the plurality of addresses of the apparatus.

In an example, the processing module 710 is further configured to: before selecting the first manner from the plurality of manners based on the source address or the destination address in the connection establishment request message, determine that a processing process associated with the source address in the connection establishment request message is not stored; and the processing module is further configured to: when the first manner is the manner of determining a processing process based on load information of the processing process, after the first processing process is determined, store an association relationship between the first processing process and the source address in the connection establishment request message.

In an example, the receiving module 720a is further configured to receive a first message, where a source address of the first message is the same as the source address in the connection establishment request message; and the processing module is further configured to assign the first message to the first processing process based on the stored association relationship between the first processing process and the source address.

In an example, the storage module 730 may store computer-executable instructions for the method performed by the first network element, to enable the processing module 710, the receiving module 720a, and the sending module 720b to perform the method performed by the first network element in the foregoing examples.

For example, the storage module may include one or more memories. The memory may be a component that is configured to store a program or data and that is in one or more devices or circuits. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

In an example, the apparatus 700 may be a second network element, or may be a chip or a functional unit used in the second network element. The apparatus 700 has any function of the second network element in the foregoing method. For example, the apparatus 700 can perform steps performed by the second network element in the method described with reference to FIG. 2, FIG. 3, FIG. 5, and FIG. 6.

The receiving module 720a may perform a receiving action performed by the second network element in the foregoing method embodiments.

The sending module 720b may perform a sending action performed by the second network element in the foregoing method embodiments.

The processing module 710 may perform an action, other than the sending action and the receiving action, performed by the second network element in the foregoing method embodiments.

In an example, the processing module 710 is configured to: when a first network element and the apparatus are located in a same region, select a first address from a plurality of stored addresses that identify the first network element; or when the first network element and the apparatus are not located in the same region, select a second address from the plurality of addresses of the first network element, where a manner corresponding to the first address is a manner of determining a processing process based on load information of the processing process, and a manner corresponding to the second address is a manner of determining a processing process based on a hash selection mechanism; and the sending module 720b is configured to send a connection establishment request message to the first network element, where a destination address in the connection establishment request message is the first address or the second address.

In an example, the processing module 710 is configured to: when a volume of data on a link established based on the connection establishment request message is less than or equal to a specified threshold, select a first address from a plurality of stored addresses that identify the first network element; or when the volume of data is less than or equal to the specified threshold, select a second address from the plurality of addresses of the first network element, where a manner corresponding to the first address is a manner of determining a processing process based on load information of the processing process, and a manner corresponding to the second address is a manner of determining a processing process based on a hash selection mechanism; and the sending module 720b is configured to send the connection establishment request message to the first network element, where a destination address in the connection establishment request message is the first address or the second address.

In an example, the storage module 730 may store computer-executable instructions for the method performed by the second network element, to enable the processing module 710, the receiving module 720a, and the sending module 720b to perform the method performed by the second network element in the foregoing examples.

For example, the storage module may include one or more memories. The memory may be a component that is configured to store a program or data and that is in one or more devices or circuits. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

As a possible product form, the apparatus may be implemented using a general bus architecture.

FIG. 8 is a schematic block diagram of a communication apparatus 800.

The apparatus 800 may include a processor 810, and optionally a transceiver 820 and a memory 830. The transceiver 820 may be configured to receive a program or instructions and transmit the program or instructions to the processor 810. Alternatively, the transceiver 820 may be configured to perform communication interaction between the apparatus 800 and another communication device, for example, exchange control signaling and/or service data. The transceiver 820 may be code and/or a data read/write transceiver. Alternatively, the transceiver 820 may be a signal transmission transceiver between the processor and a transceiver. The processor 810 is electrically coupled to the memory 830.

In an example, the apparatus 800 may be a first network element, or may be a chip used in the first network element. It should be understood that the apparatus has any function of the first network element in the foregoing method. For example, the apparatus 800 can perform steps performed by the first network element in the method described with reference to FIG. 2, FIG. 3, FIG. 5, and FIG. 6. For example, the memory 830 is configured to store a computer program, and the processor 810 may be configured to: invoke the computer program or instructions stored in the memory 830, to perform the method performed by the first network element in the foregoing examples; or perform, through the transceiver 820, the method performed by the first network element in the foregoing examples.

In an example, the apparatus 800 may be a second network element, or may be a chip used in the second network element. It should be understood that the apparatus has any function of the second network element in the foregoing method. For example, the apparatus 800 can perform steps performed by the second network element in the method described with reference to FIG. 2, FIG. 3, FIG. 5, and FIG. 6. For example, the memory 830 is configured to store a computer program, and the processor 810 may be configured to: invoke the computer program or instructions stored in the memory 830, to perform the method performed by the second network element in the foregoing examples; or perform, through the transceiver 820, the method performed by the second network element in the foregoing examples.

The processing module 710 in FIG. 7 may be implemented by using the processor 810.

The receiving module 720a and the sending module 720b in FIG. 7 may be implemented by using the transceiver 820. Alternatively, the transceiver 820 includes a receiver and a transmitter. The receiver performs a function of the receiving module, and the transmitter performs a function of the sending module.

The storage module 730 in FIG. 7 may be implemented by using the memory 830.

As a possible product form, the apparatus may be implemented by a general-purpose processor (the general-purpose processor is also referred to as a chip or a chip system).

In a possible implementation, the general-purpose processor implementing the apparatus used in the first network element or the apparatus used in the second network element includes a processing circuit (the processing circuit may also be referred to as a processor), and optionally a storage medium (the storage medium may also be referred to as a memory) and an input/output interface for internal connection to and communication with the processing circuit. The storage medium is configured to store instructions executed by the processing circuit, to perform the method performed by the first network element or the second network element in the foregoing examples.

The processing module 710 in FIG. 7 may be implemented by using the processing circuit.

The receiving module 720a and the sending module 720b in FIG. 7 may be implemented by using the input/output interface. Alternatively, the input/output interface includes an input interface and an output interface. The input interface performs a function of the receiving module, and the output interface performs a function of the sending module.

The storage module 730 in FIG. 7 may be implemented by using the storage medium.

As a possible product form, the apparatus in embodiments of this application may be further implemented by using one or more FPGAs (field-programmable gate arrays), a PLD (programmable logic device), a controller, a state machine, a gate logic, a discrete hardware component, any other proper circuit, or any combination of circuits that can perform various functions described in this application.

An embodiment of this application further provides a computer-readable storage medium. The computer-readable storage medium stores a computer program. When the computer program is executed by a computer, the computer is enabled to perform the foregoing communication method. In other words, the computer program includes instructions for implementing the foregoing communication method.

An embodiment of this application further provides a computer program product. The computer program product includes computer program code. When the computer program code is run on a computer, the computer is enabled to perform the foregoing communication method.

An embodiment of this application further provides a communication system. The communication system includes a first network element and a second network element that perform the foregoing communication method.

In addition, the processor in embodiments of this application may be a central processing unit (central processing unit, CPU), a baseband processor, a network processor (network processor, NP), or a combination of the CPU and the NP, where the baseband processor may be integrated with or separated from the CPU. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL) or another programmable logic device, a discrete gate or a transistor logic device, a discrete hardware component, any combination thereof, or the like. The general-purpose processor may be a microprocessor. Alternatively, the processor may be any conventional processor or the like.

The memory mentioned in embodiments of this application may be a volatile memory or a nonvolatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. It is illustrated by way of example but not limitation that many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It is to be noted that the memory described in this application aims to include but is not limited to these memories and any memory of another proper type.

The transceiver mentioned in embodiments of this application may include an independent transmitter and/or an independent receiver, or may be a transceiver that integrates a transmitter and a receiver. The transceiver may operate according to an instruction of a corresponding processor. Optionally, the transmitter may correspond to a transmitting machine in a physical device, and the receiver may correspond to a receiving machine in the physical device.

Persons of ordinary skill in the art may be aware that, in combination with the examples described in embodiments disclosed in this specification, method steps and units can be implemented by electronic hardware, computer software, or a combination thereof. To clearly describe the interchangeability between the hardware and the software, the foregoing has generally described steps and compositions of each embodiment based on functions. Whether the functions are performed by the hardware or the software depends on particular applications and design constraints of the technical solutions. Persons of ordinary skill in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and parts displayed as units may or may not be physical units, and may be located in one place, or may be distributed on a plurality of network units. Some or all of the units may be selected based on actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, an optical disc, or the like.

The term "and/or" in this application describes an association relationship between associated objects, and indicates that three relationships may exist. For example, A and/or B may indicate the following three cases: Only A exists, both A and B exist, and only B exists. The character "/" usually indicates an "or" relationship between the associated objects. "A plurality of' in this application means two or more. In addition, it should be understood that in description of this application, terms such as "first" and "second" are merely used for distinguishing and description, but should not be understood as indicating or implying relative importance, or should not be understood as indicating or implying a sequence.

Although example embodiments of this application have been described, persons skilled in the art can make changes and modifications to these embodiments once they learn of a basic inventive concept. Therefore, the appended claims are intended to be construed as covering the example embodiments and all changes and modifications that fall within the scope of this application.

Clearly, persons skilled in the art can make various modifications and variations to embodiments of this application without departing from the spirit and scope of embodiments of this application. In this way, this application is intended to cover these modifications and variations to embodiments of this application provided that they fall within the scope of protection defined by the claims of this application and equivalent technologies thereof.

## Claims

1. A communication method, comprising:
receiving, by a first network element, a connection establishment request message from a second network element;
selecting, by the first network element, a first manner from a plurality of manners based on a source address or a destination address in the connection establishment request message, wherein the plurality of manners comprise a manner of determining a processing process based on load information of the processing process and a manner of determining a processing process based on a hash selection mechanism; and
determining, by the first network element in the first manner, a first processing process for processing the connection establishment request.

2. The method according to claim 1, wherein the selecting, by the first network element, a first manner from a plurality of manners based on a source address in the connection establishment request message comprises:
when the source address in the connection establishment request message is in a specified address list, selecting, as the first manner, the manner of determining a processing process based on load information of the processing process; or
when the source address in the connection establishment request message is not in the specified address list, selecting, as the first manner, the manner of determining a processing process based on a hash selection mechanism.

3. The method according to claim 1, wherein the selecting, by the first network element, a first manner from a plurality of manners based on a source address in the connection establishment request message comprises:
obtaining a region number of the second network element from the source address in the connection establishment request message; and
when the region number of the second network element is the same as a region number of the first network element, selecting, as the first manner, the manner of determining a processing process based on load information of the processing process; or
when the region number of the second network element is different from the region number of the first network element, selecting, as the first manner, the manner of determining a processing process based on a hash selection mechanism.

4. The method according to claim 1, wherein the selecting, by the first network element, a first manner from a plurality of manners based on a destination address in the connection establishment request message comprises:
using, as the first manner, a manner corresponding to the destination address in the connection establishment request message, wherein the first network element has a plurality of addresses that identify the first network element, the plurality of addresses of the first network element are in a one-to-one correspondence with the plurality of manners, and the destination address is selected by the second network element from the plurality of addresses of the first network element.

5. The method according to any one of claims 1 to 4, wherein before the selecting, by the first network element, a first manner from a plurality of manners based on a source address or a destination address in the connection establishment request message, the method further comprises:
determining that a processing process associated with the source address in the connection establishment request message is not stored; and
when the first manner is the manner of determining a processing process based on load information of the processing process, after the first processing process is determined, the method further comprises:
storing an association relationship between the first processing process and the source address in the connection establishment request message.

6. The method according to claim 5, further comprising:
receiving, by the first network element, a first message, wherein a source address of the first message is the same as the source address in the connection establishment request message; and
assigning the first message to the first processing process based on the stored association relationship between the first processing process and the source address.

7. A communication method, comprising:
when a first network element and a second network element are located in a same region, selecting, by the second network element, a first address from a plurality of stored addresses that identify the first network element; or when the first network element and the second network element are not located in the same region, selecting, by the second network element, a second address from the plurality of addresses of the first network element, wherein a manner corresponding to the first address is a manner of determining a processing process based on load information of the processing process, and a manner corresponding to the second address is a manner of determining a processing process based on a hash selection mechanism; and
sending, by the second network element, a connection establishment request message to the first network element, wherein a destination address in the connection establishment request message is the first address or the second address.

8. A communication method, comprising:
when a volume of data on a link established based on a connection establishment request message is less than or equal to a specified threshold, selecting, by the second network element, a first address from a plurality of stored addresses that identify a first network element; or when the volume of data is less than or equal to the specified threshold, selecting, by the second network element, a second address from the plurality of addresses of the first network element, wherein a manner corresponding to the first address is a manner of determining a processing process based on load information of the processing process, and a manner corresponding to the second address is a manner of determining a processing process based on a hash selection mechanism; and
sending, by the second network element, the connection establishment request message to the first network element, wherein a destination address in the connection establishment request message is the first address or the second address.

9. A communication apparatus, comprising:
a receiving module, configured to receive a connection establishment request message from a second network element; and
a processing module, configured to: select a first manner from a plurality of manners based on a source address or a destination address in the connection establishment request message, wherein the plurality of manners comprise a manner of determining a processing process based on load information of the processing process and a manner of determining a processing process based on a hash selection mechanism; and determine, in the first manner, a first processing process for processing the connection establishment request.

10. The apparatus according to claim 9, wherein the processing module is specifically configured to: when the source address in the connection establishment request message is in a specified address list, select, as the first manner, the manner of determining a processing process based on load information of the processing process; or when the source address in the connection establishment request message is not in the specified address list, select, as the first manner, the manner of determining a processing process based on a hash selection mechanism.

11. The apparatus according to claim 9, wherein the processing module is specifically configured to: obtain a region number of the second network element from the source address in the connection establishment request message; and when the region number of the second network element is the same as a region number of the apparatus, select, as the first manner, the manner of determining a processing process based on load information of the processing process; or when the region number of the second network element is different from the region number of the apparatus, select, as the first manner, the manner of determining a processing process based on a hash selection mechanism.

12. The apparatus according to claim 9, wherein the processing module is specifically configured to use, as the first manner, a manner corresponding to the destination address in the connection establishment request message, wherein the apparatus has a plurality of addresses that identify the apparatus, the plurality of addresses of the apparatus are in a one-to-one correspondence with the plurality of manners, and the destination address is selected by the second network element from the plurality of addresses of the apparatus.

13. The apparatus according to any one of claims 9 to 12, wherein the processing module is further configured to: before selecting the first manner from the plurality of manners based on the source address or the destination address in the connection establishment request message, determine that a processing process associated with the source address in the connection establishment request message is not stored; and the processing module is further configured to: when the first manner is the manner of determining a processing process based on load information of the processing process, after the first processing process is determined, store an association relationship between the first processing process and the source address in the connection establishment request message.

14. The apparatus according to claim 13, wherein the receiving module is further configured to receive a first message, wherein a source address of the first message is the same as the source address in the connection establishment request message; and the processing module is further configured to assign the first message to the first processing process based on the stored association relationship between the first processing process and the source address.

15. A communication apparatus, comprising:
a processing module, configured to: when a first network element and the apparatus are located in a same region, select a first address from a plurality of stored addresses that identify the first network element; or when the first network element and the apparatus are not located in the same region, select a second address from the plurality of addresses of the first network element, wherein a manner corresponding to the first address is a manner of determining a processing process based on load information of the processing process, and a manner corresponding to the second address is a manner of determining a processing process based on a hash selection mechanism; and
a sending module, configured to send a connection establishment request message to the first network element, wherein a destination address in the connection establishment request message is the first address or the second address.

16. A communication apparatus, comprising:
a processing module, configured to: when a volume of data on a link established based on the connection establishment request message is less than or equal to a specified threshold, select a first address from a plurality of stored addresses that identify the first network element; or when the volume of data is less than or equal to the specified threshold, select a second address from the plurality of addresses of the first network element, wherein a manner corresponding to the first address is a manner of determining a processing process based on load information of the processing process, and a manner corresponding to the second address is a manner of determining a processing process based on a hash selection mechanism; and
a sending module, configured to send the connection establishment request message to the first network element, wherein a destination address in the connection establishment request message is the first address or the second address.

17. A communication apparatus, comprising a functional module for implementing the method according to any one of claims 1 to 8.

18. A communication apparatus, comprising a processor, wherein the processor is coupled to a memory;
the memory is configured to store computer programs or instructions, and
the processor is configured to: execute some or all of the computer programs or instructions in the memory; and when the some or all of the computer programs or instructions are executed, implement the method according to any one of claims 1 to 8.

19. A communication apparatus, comprising a processor and a memory, wherein
the memory is configured to store computer programs or instructions, and
the processor is configured to: execute some or all of the computer programs or instructions in the memory; and when the some or all of the computer programs or instructions are executed, implement the method according to any one of claims 1 to 8.

20. A chip system, wherein the chip system comprises a processing circuit, and the processing circuit is coupled to a storage medium; and
the processing circuit is configured to: execute some or all computer programs or instructions in the storage medium; and when the some or all computer programs or instructions are executed, implement the method according to any one of claims 1 to 8.

21. A computer-readable storage medium, configured to store a computer program, wherein the computer program comprises instructions for implementing the method according to any one of claims 1 to 8.

22. A computer program product, wherein the computer program product comprises computer program code, and when the computer program code is run on a computer, the computer is enabled to perform the method according to any one of claims 1 to 8.
